# EUROPEAN PATENT SPECIFICATION

(11) **EP 2 770 224 B1**
(45) Date of publication and mention of the grant of the patent: **10.01.2018**
(21) Application number: 13156105.2
(22) Date of filing: 21.02.2013
(51) Int. Cl.: F16D 41/32

(54) **Driving system for bicycle hub**
Antriebssystem für eine Fahrradnabe
Système d'entraînement de moyeu de bicyclette

(43) Date of publication of application: 27.08.2014
(73) Proprietor: Joy Industrial Co., Ltd., Taichung Hsien (TW)
(72) Inventor: Chen, Chun-Hsung, Taichung Hsien (TW)
(74) Representative: Chaillot, Geneviève

(56) References cited:
- GB-A- 2 174 464
- US-A- 5 188 205

## Description

### FIELD OF THE INVENTION

The present invention relates to a driving system, and more particularly, to a driving system for bicycle hub and the driving system is clutched linearly to drive the hub in one direction.

### BACKGROUND OF THE INVENTION

The conventional way to operate bicycles is to rotate the crank forward so that the wheels rotate forward. When the user stop to tread the pedals, the wheels still move forward by initial force and no work is output by the user. When the user rotates the crank backward, the wheels are not affected by the backward action because there is a ratchet mechanism in the hub.

The bicycle hub generally has a hub with bearings located therein, an axle extends through the hub and the bearings. A socket unit is connected to the hub and a ratchet unit is connected to the socket unit. The socket unit is connected with a chain so that when the chain drives the socket unit, the ratchet unit is rotated which drives the hub to rotate in the same direction.

The ratchet units are cataloged by radial driving type and end driving type, wherein the radial driving type means that the first ratchet gear is mounted to the socket unit and the second ratchet gear is located in the hub. The first and second ratchet gears are engaged with each other. The pawls rotate in the radial direction of the axle to contact the driving ratchet gear. The end driving type is also known as axial driving type, which means that the first ratchet gear is mounted to the end face of the socket unit and the second ratchet gear is located in the hub. The first and second ratchet gears are engaged with each other. The two ratchet gears are engaged in the axial direction of the axle.

Taiwan Patent Application No. 099104719 discloses an axle rotatably extending through a hub, a gear unit rotatably connected to the axle and located close to the hub. The gear unit has an inner end inserted into the hub, an outer end located in opposite to the inner end, and multiple grooves defined in the inner end and extending toward the outer end. The inner end has a bottom which define the grooves and multiple sidewalls extending radially from the bottom so as to be cooperated with the bottom to define the grooves. Multiple stepped portions extend from the sidewalls and located in the grooves. A clutch unit is located between the hub and the inner end of the gear unit. The clutch unit has a toothed ring located in the hub, multiple pawls pivotably connected to the grooves, and a resilient member located in the inner end and keeping the toothed ring and the pawls to move in one direction. The pawls respectively contact the stepped portions and are located by a gap from the sidewalls respectively.

Taiwan Utility Application No. 100219245 discloses a one-way ratchet unit which keeps the sprocket unit and the hub to rotate in one direction only. The ratchet unit comprises a first engaging portion connected to one end of the hub and having a first one-way ratchet gear which has multiple teeth each have a tip, a tool and two inclined guide sides. A second engaging portion is connected to an end of the sprocket unit and has multiple second one-way ratchet gear which has multiple teeth each have a tip, a tool and two inclined guide sides. The first and second one-way ratchet gears are engaged with each other in one directly. At least one resilient member is used to allow the first and second one-way ratchet gears to move over each other when the rotation direction is in opposite to the effective direction. At least one protrusion extends from the tip of the ratchet teeth of one of the first and second ratchet gears. The at least one protrusion extends along the inclined guide sides of the teeth. Those teeth without the at least one protrusion has a recess. At least one yield portion which is recessed in the root of the teeth of one of the first and second ratchet gears. When the first and second ratchet gears are engaged with each other, the recess is engaged with the at least one yield portion.

U.S. Patent No. 6,123, 179 discloses a bicycle freewheel hub and includes a hollow hub shell sleeved rotatably on a shaft, a cylindrical driving member sleeved rotatably on the shaft and disposed adjacent to the hub shell, and a clutch unit including first and second clutch members sleeved rotatably on the shaft. The first clutch member is coupled to the driving member. The second clutch member is coupled to the hub shell. Each of the clutch members has an annular end face which extends in a direction substantially perpendicular to the shaft. The annular end face of each of the clutch members has inclined teeth that are arranged annularly around the shaft and that project axially from the annular end face. The annular end face of the second clutch member confronts the annular end face of the first clutch member. The inclined teeth of the second clutch member engage the inclined teeth of the first clutch member when the driving member rotates in a first direction, and disengage therefrom when the driving member rotates in a second direction opposite to the first direction. A spring biases one of the first and second clutch members so as to keep interengagement of the first and second clutch members.

The first two Taiwan applications are radial driving type and the U.S. Patent No. 6,123,179 is axial driving type. For the axial driving type hub, all of the ratchet teeth have to be engaged with each other to drive the hub so that the contact area of the ratchet teeth is larger than that of the radial driving type hub. Therefore, the axial driving type hub has better driving force. For the radial driving type hub, the distance of the driving position from the axle is longer than that of the axial driving type hub, so that the radial driving type hub saves effort.

For the radial driving type hub, there are three or four pawls are required on the socket unit and the pawls are pivotable radially to be engaged with the ratchet teeth on the hub. A resilient member is used to keep the pawls to be pivoted in one direction. However, the way that the pawl are pivoted to contact the individual ratchet tooth has slower linear movement than that of the axial driving type hub, so that the transmission of the driving force slightly delays. The four pawls provide limited contact area which provides less driving force and the tips of the pawls are easily worn out. When the tips of the pawls are damaged, the pawls may not able to contact the ratchet teeth to effectively drive he hub. If the four pawls have different levels of wearing, the stress will be concentrated at the tip of the pawl with less wearing, so that the driving force is not evenly spread on the four pawls. In other words, once one of the pawls is replaced, the rest of the three pawls have to be replaced. This means higher maintenance expense is required.

GB 2 174 464 discloses a one-way clutch for use as a bicycle freewheel mechanism, which is as defined in the preamble of claim 1.

US 5 188 205 A discloses a one-way clutch comprising an outer clutch member, an inner clutch member and an intermediate resiliently flexible clutch member located between the outer clutch member and the inner clutch member. The outer clutch member carries ratchet teeth and the inner clutch member carries two sets of sloping faced projections around its periphery. The intermediate clutch member carriers ratchet teeth engageable with the outer member ratchet teeth and lateral projections able to abut the projections of the inner clutch member, so that a driving torque applied to the outer clutch member may be transmitted to the inner clutch member via the intermediate clutch member. The resilience of the intermediate clutch member causes it to contract to its natural position on the inner clutch member, where the ratchet teeth are disengaged from each other.

The present invention intends to provide a ratchet unit which is used for the radial driving type hub and provides larger driving force which is evenly spread to the ratchet teeth to increase the life of the ratchet unit.

### SUMMARY OF THE INVENTION

The present invention relates to a bicycle hub driving system and comprises a hub with a socket unit connected thereto. An axle unit extends through the hub and the socket unit. A clutch driving device is located between the ratchet unit and the hub. The clutch driving device includes a clutch unit, a driving unit and a driving member located between the clutch unit and the driving unit. The clutch unit includes a first ratchet portion on the ratchet unit and a second ratchet portion on the driving member. The driving unit includes first driving teeth on the hub and second driving teeth on the driving member. By the linear movement of the riving member between the first driving teeth and the first ratchet portion, the first and second ratchet portions are engaged with each other or disengaged from each other to co-rotate the hub and the socket unit in one direction. A return member is mounted to the driving member and the first ratchet portion to move the driving member linearly toward the first ratchet portion.

The clutch driving device moves linearly and drives the hub radially so that the operation of the hub saves effort and the hub is operated sensitively.

The driving member of the clutch driving device moves linearly and has multiple ratchet teeth and multiple driving teeth so as to have larger contact area to increase the transmission force.

The load to the clutch driving device is evenly spread to the ratchet portions of the driving member so that the wearing for the ratchet teeth are even to avoid single ratchet tooth from overly worn out.

The driving member has multiple ratchet teeth so that even if one of the ratchet teeth is damaged, the driving member can be operated normally.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show the bicycle hub driving system of the present invention;
Fig. 2 is an exploded view to show the bicycle hub driving system of the present invention;
Fig. 3 is a cross sectional view to show the bicycle hub driving system of the present invention;
Fig. 4 is an end view of the bicycle hub driving system of the present invention;
Fig. 5 is another end view of the bicycle hub driving system of the present invention;
Fig. 6 is an end view to show the disengaged status of the bicycle hub driving system of the present invention;
Fig. 7 is another end end view to show the disengaged status of the bicycle hub driving system of the present invention;
Fig. 8 is an exploded view to show the second embodiment of the bicycle hub driving system of the present invention;
Fig. 9 is a cross sectional view to show the second embodiment of the bicycle hub driving system of the present invention;
Fig. 10 is an end view of the second embodiment of the bicycle hub driving system of the present invention;
Fig. 11 is an exploded view to show the third embodiment of the bicycle hub driving system of the present invention;
Fig. 12 is a cross sectional view to show the third embodiment of the bicycle hub driving system of the present invention;
Fig. 13 shows the socket unit and the positioning clip of the third embodiment of the bicycle hub driving system of the present invention;
Fig. 14 is an enlarged cross sectional view of the third embodiment of the bicycle hub driving system of the present invention;
Fig. 15 is an exploded view to show the fourth embodiment of the bicycle hub driving system of the present invention;
Fig. 16 is an end view of the fourth embodiment of the bicycle hub driving system of the present invention;
Fig. 17 is an exploded view to show the fifth embodiment of the bicycle hub driving system of the present invention, and
Fig. 18 is an end view of the fifth embodiment of the bicycle hub driving system of the present invention.

### DETAILED DESCRIPTION OF THE PREFERRED EMBODIMENT

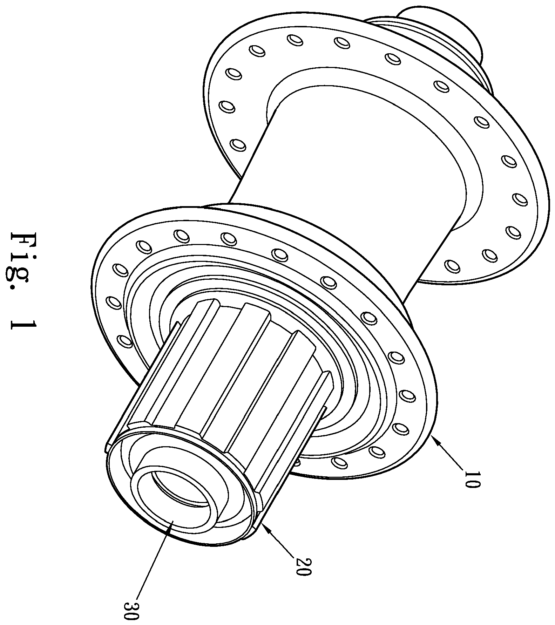

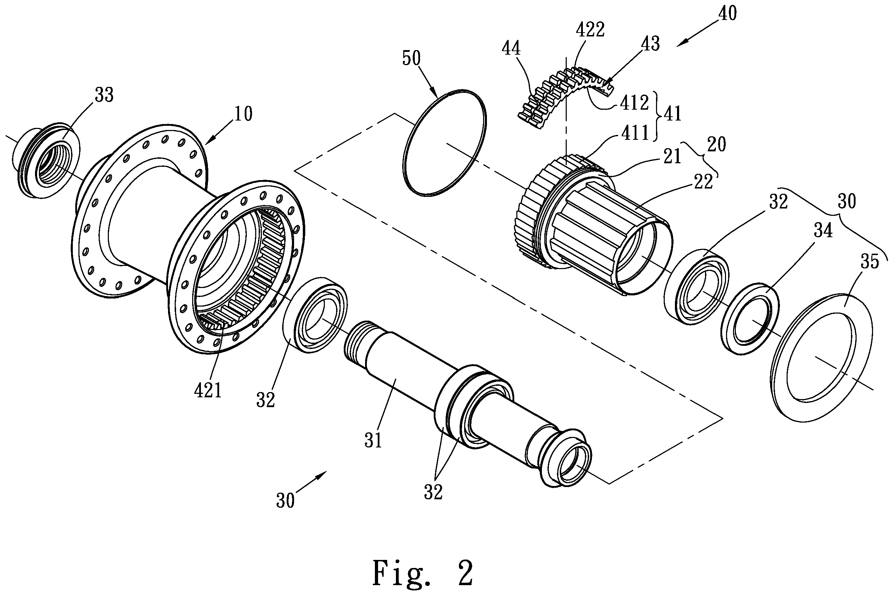

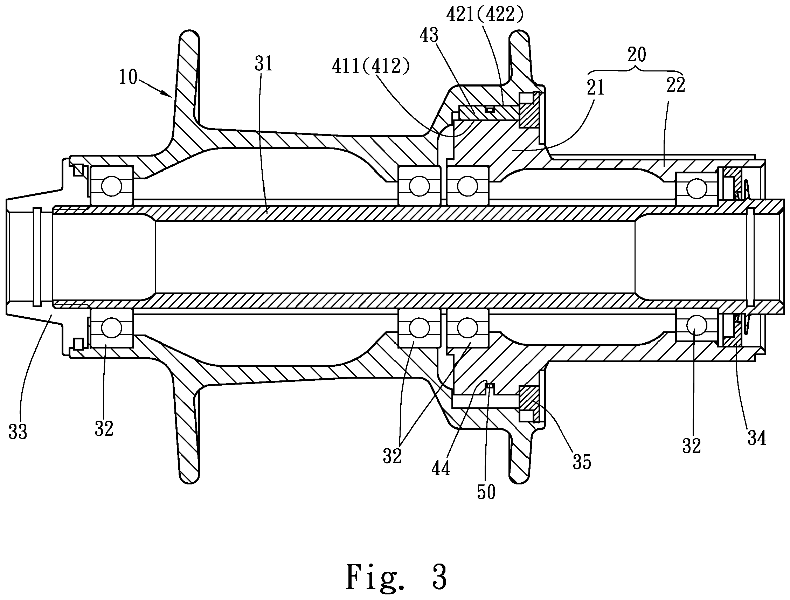

Referring to Figs. 1 to 5, the bicycle hub driving system of the present invention comprises a hub 10, a socket unit 20 connected to the hub 10, an axle unit 30, a clutch driving device 40, and a return member 50.

The hub 10 is a hollow hub and located at the center of a bicycle wheel.

The socket unit 20 is a hollow socket and a ratchet unit 21 and a flywheel unit 22 are respectively mounted to the socket unit 20. The ratchet unit 21 is located in one inner end of the hub 10 and the flywheel unit 22 is to be connected with a sprocket unit.

The axle unit 30 is located between the hub 10 and the socket unit 20, and comprises an axle 31 extending therethrough. Three rotary members 32 are respectively located between the axle 31 and the inner periphery of the hub 10, and between the axle 31 and the socket unit 20. The axle 31 extends into the hub via the exposed end of the socket unit 20 and extends through the rotary members 32. A sealing member 33 is threadedly connected to the other end of the hub 10. A first seal ring 34 is located between the inner periphery of the socket unit 20 and the axle 31, and a second seal ring 35 is located between the inner periphery of the hub 10 and the socket unit 20.

The clutch driving device 40 is located between the ratchet unit 21 and the inner periphery of the hub 10, and the clutch driving device 40 comprises a clutch unit 41, a driving unit 42 and a driving member 43 located between the clutch unit 41 and the driving unit 42. The driving member 43 is a curved member which shares a common center with the hub 10 and the socket unit 20. The driving member 43 has an outer curved face and an inner curved face. The clutch unit 41 comprises a first ratchet portion 411 and a second ratchet portion 412, wherein the first ratchet portion 411 is located on the ratchet unit 21 and the second ratchet portion 412 is connected to the driving member 43. The driving unit 42 comprises first driving teeth 421 and second driving teeth 422, wherein the first driving teeth 421 are defined in the inner end of the hub 10 and the second driving teeth 422 are defined in the driving member 43. The first driving teeth 421 are engaged with the second driving teeth 422. The driving member 43 is movable linearly and radially between the first ratchet portion 411 and the first driving teeth 421 to engage the first ratchet portion 411 with second ratchet portion 412, or to disengage the first ratchet portion 411 from the second ratchet portion 412, and to co-rotate the hub 10 with the socket unit 20, or to separate the hub 10 from the socket unit 20. By the engagement between the first ratchet portion 411 with second ratchet portion 412 of the socket unit 20, the hub 10 is co-rotated while the first driving teeth 421 are engaged with second driving teeth 422. The second driving teeth 422 have a groove 44 which separates the second driving teeth 422 into two parallel teeth.

The return member 50 is a ring and engaged with the groove 44. The return member 50 is mounted to the driving member 43 and the first ratchet portion 411 to move the driving member 43 linearly toward the first ratchet portion 411.

The hub 10 has the first driving teeth 421 defined integrally therewith and the first ratchet portion 411 is integrally formed with the socket unit 20. The rotary members 32 are respectively to the axle 31, and the driving member 43 is positioned on the outside of the first ratchet portion 411 by the returning member 50. The rerun member 50 is engaged with the groove 44 and the first and second ratchet portions 411, 412 are engaged with each other. The driving member 43 is engaged with the first driving teeth 421 so as to engage the first driving teeth 421 with the second driving teeth 422. The axle 31 and the rotary members 32 are inserted into the hub 10 and the socket unit 20 via one end of the socket unit 20. The sealing member 33 is connected to the other end of the hub 10. Finally, the first seal ring 34 is located between the inner periphery of the socket unit 20 and the axle 31, and the second seal ring 35 is located between the inner periphery of the hub 10 and the socket unit 20 to finish the assembly.

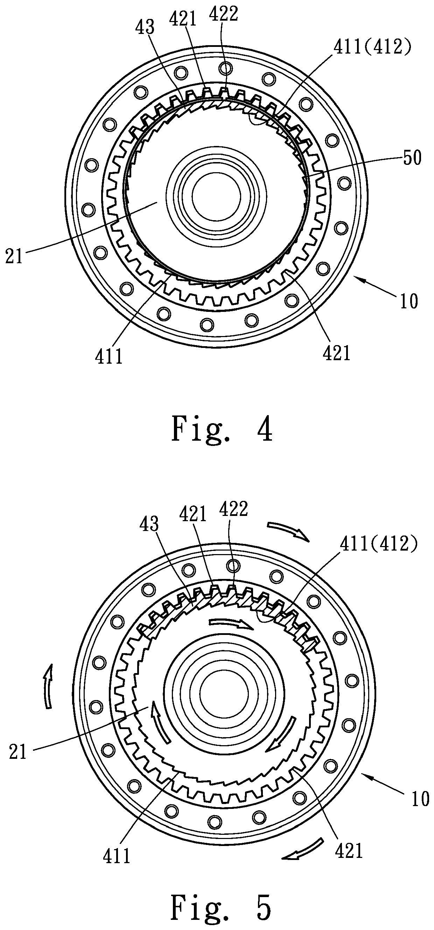

As shown in Figs. 4 and 5, the return member 50 provides a force to move the driving member 43 toward the ratchet unit 21 so as to engage the first ratchet portion 411 with the second ratchet portion 412. When the socket unit 20 is driven by the chain, the first ratchet portion 411 is engaged with the second ratchet portion 412, and the driving member 43 is driven. The engagement between the first and second driving teeth 421, 422 indirectly drives the hub 10 in the same direction to move the bicycle forward.

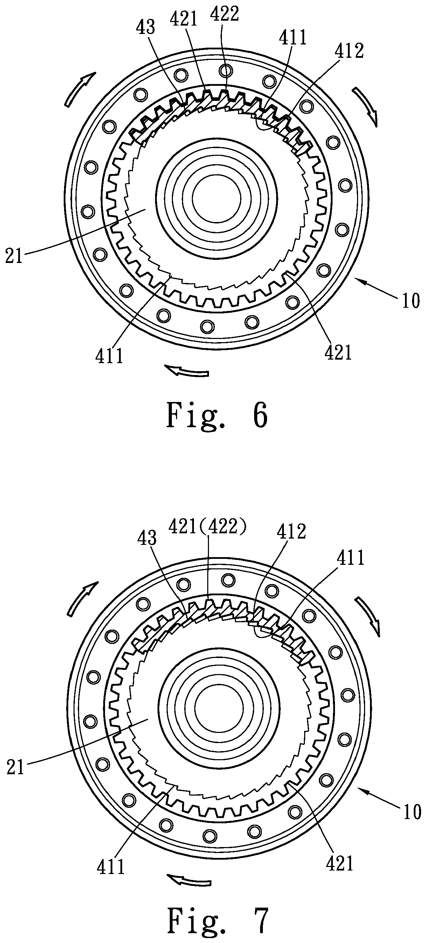

As shown in Figs. 6 and 7, when the socket unit 20 is not driven by the chain, in other words, the pedals are not treaded, the socket unit 20 is not rotated, while the driving member 43 and the hub 10 are co-rotated, so that the first ratchet portion 411 is disengaged from the second ratchet portion 412. Fig. 6 shows that the first ratchet portion 411 is partially disengaged from the second ratchet portion 412, and Fig. 7 shows that the first ratchet portion 411 is completely disengaged from the second ratchet portion 412. The clutch driving device 40 now freely rotates and no work is output. The hub 10 rotates forward by the initial force.

The clutch driving device 40 of the present invention has a driving member 43 which is able to linearly moveable and drives the hub radially. The driving member 43 is located between the hub 10 and the socket unit 20. By using the driving unit 42 located between the driving member 43 and the hub 10, the first and second driving teeth 421, 422 are engaged with each other to transfer force. The clutch unit 41 is located between the driving member 43 and the socket unit 20, and the first and second ratchet portions 411, 411 are cooperated with each other to drive the hub 10 in one direction. In detail, when the first and second ratchet portions 411, 412 are disengaged from each other, the first and second driving teeth 421, 422 are engaged with each other. When the first and second ratchet portions 411, 412 are engaged with each other, the first and second driving teeth 421, 422 are disengaged from each other.

The driving member 43 is linearly movable between the first driving teeth 421 and the first ratchet portion 411 so that the clutch driving device 40 radially drives the hub 10 and the driving member 43 is sensitive and responds quickly to improve the delayed action of the pawls used in the conventional driving devices.

The driving member 43 has multiple ratchet teeth and driving teeth, the second driving teeth 421 are formed on the outside of the driving member 43 and the second ratchet portion 412 is defined in the inner side of the driving member 43. The engagement between the first and second driving teeth 421, 422, and the engagement between the first and second ratchet portions 411, 412 provide larger contact area to increase the driving force and reduce wearing. The arrangement improves the shortcoming of less driving force of the conventional driving devices.

The multiple ratchet teeth of the second ratchet portion 412 evenly share the force so that the wearing for the ratchet teeth of the second ratchet portion 412 is even. Furthermore, even if one of the ratchet teeth of the second ratchet portion 412 is damaged, the rest of the ratchet teeth are able to perform normally without replacing any part. This also improves the shortcoming of the replacement of the pawls of the conventional driving devices.

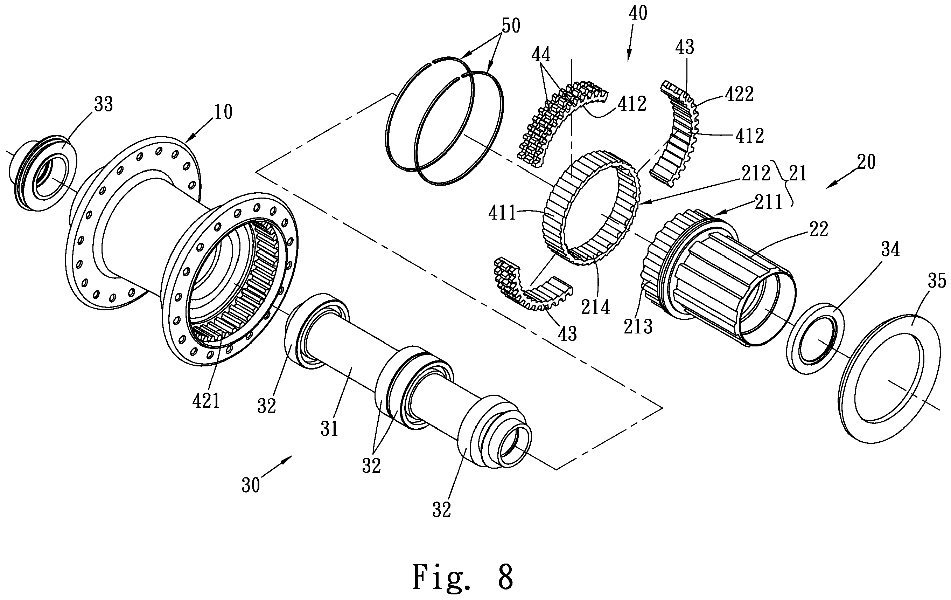

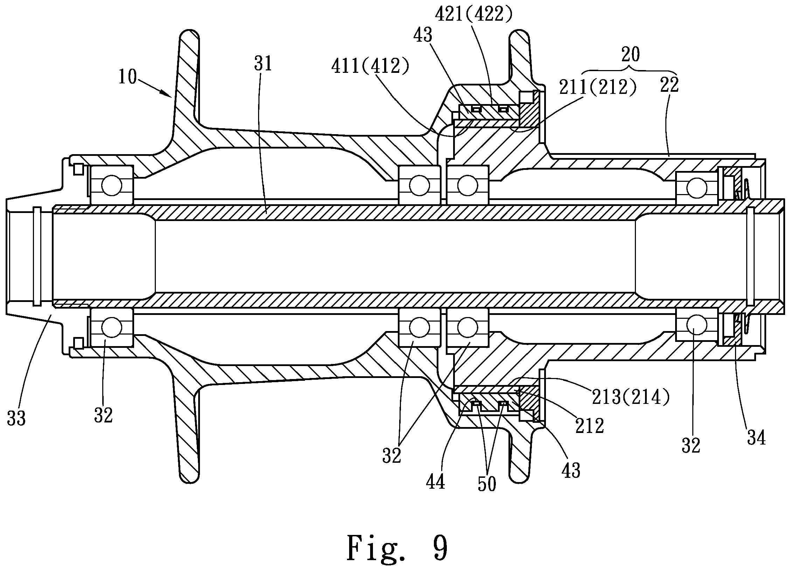

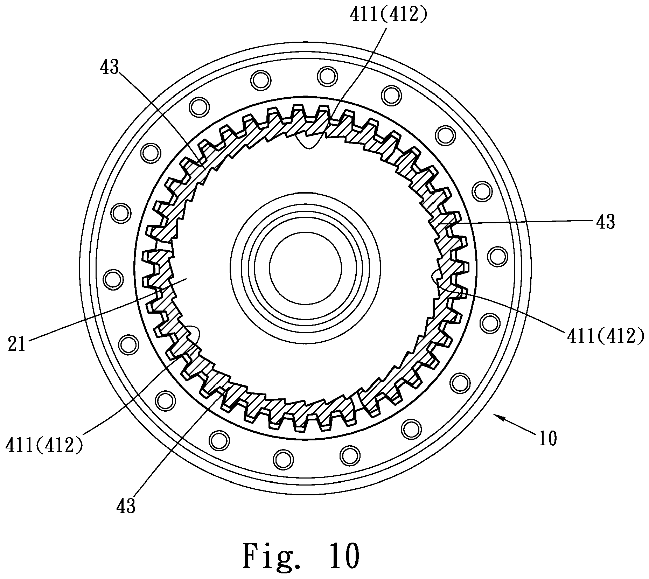

As shown in Figs. 8 to 10, the second embodiment is disclosed, wherein the ratchet unit 21 comprises a connection part 211 and a ring 212 on the socket unit 20. The connection part 211 is a ring-shaped part and has multiple first positioning portions 213 extending axially therefrom. The ring 212 has the first ratchet portion 411 defined in the outer periphery thereof and second positioning portions 214 are defined in the inner periphery of the ring 212. The first positioning portions 213 are engaged with the second positioning portions 214. There are three driving members 43 are located between the first ratchet portion 411 and the first driving teeth 421. The second ratchet portion 412 has two grooves 44 defined axially therein and the two grooves 44 are parallel to each other so as to define the second ratchet portion 412 into three rows of ratchet teeth. There are two return members 50 are respectively engaged with the grooves 44 to position the driving members 43.

The ratchet unit 21 of this embodiment comprises the connection part 211 and a ring 212 which is connected to the connection part 211 by the engagement between the first and second positioning portions 213, 214. This embodiment also provides multiple driving members 43 which provide larger driving force while the user saves effort to operate the driving system.

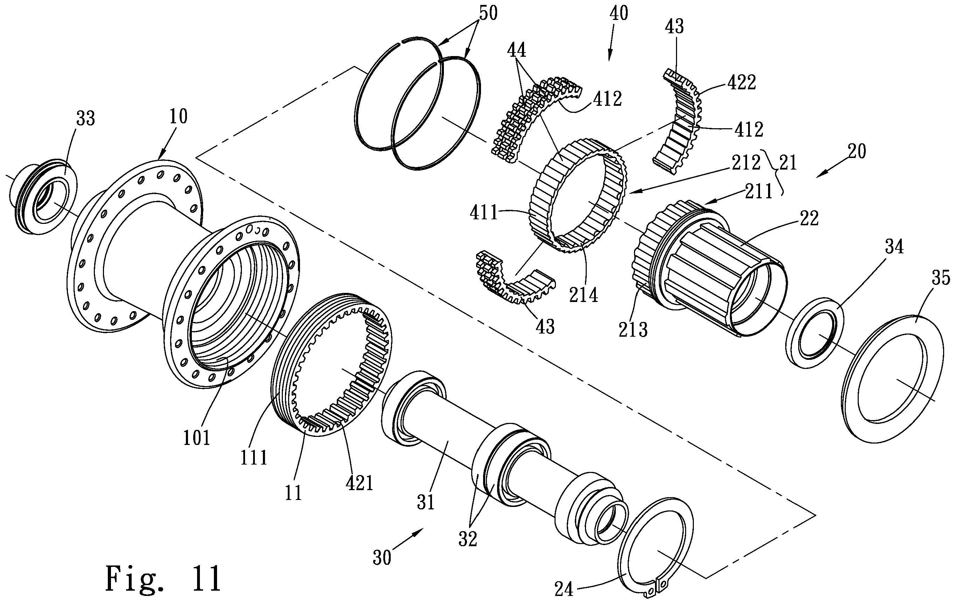

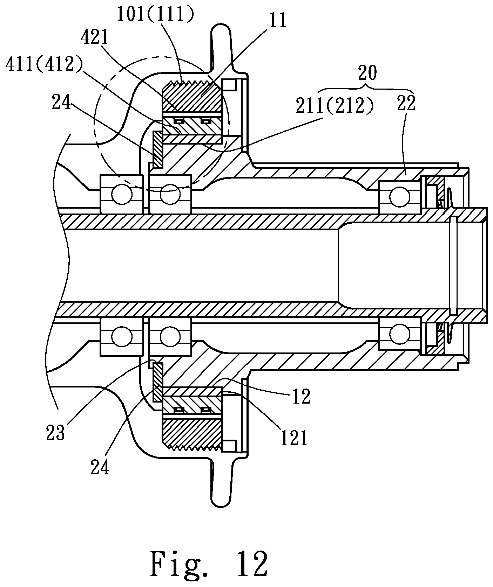

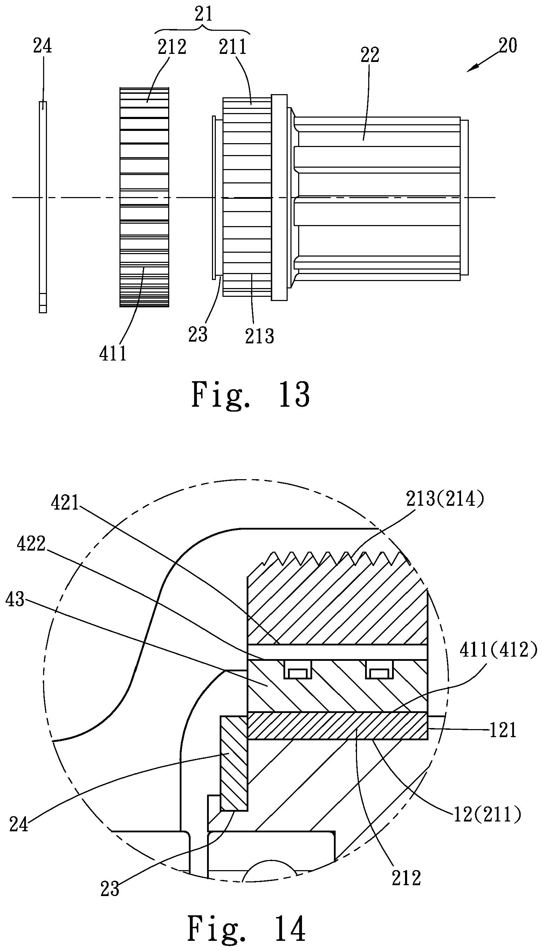

Figs. 11 to 14 disclose the third embodiment of the present invention, wherein the hub 10 has the ring-shaped driving ring 11 connected to an inner end thereof and the first driving teeth 421 are defined in the inner periphery of the driving ring 11. The driving ring 11 is threadedly connected to the inner end of the hub 10. The socket unit 20 extends from one end of the hub 10 and has a positioning slot 23 defined in the outer periphery thereof. A positioning clip 24 is engaged with the positioning slot 23 and one side of the positioning clip 24 contacts one side of the driving member 43 to prevent the driving member 43 from moving axially on the first ratchet portion 411. The socket unit 20 has a contact slot 12 defined in the outer periphery thereof and the contact slot 12 has a contact face 121 defined in one of insides thereof. The driving member 43 is mounted to the contact slot 12 and two sides of the driving member 43 respectively contact the positioning clip 24 and the contact face 121.

The two sides of the driving member 43 are respectively in contact with the positioning clip 24 and the contact face 121 so that it does not shift axially to reduce loss of the transmission force.

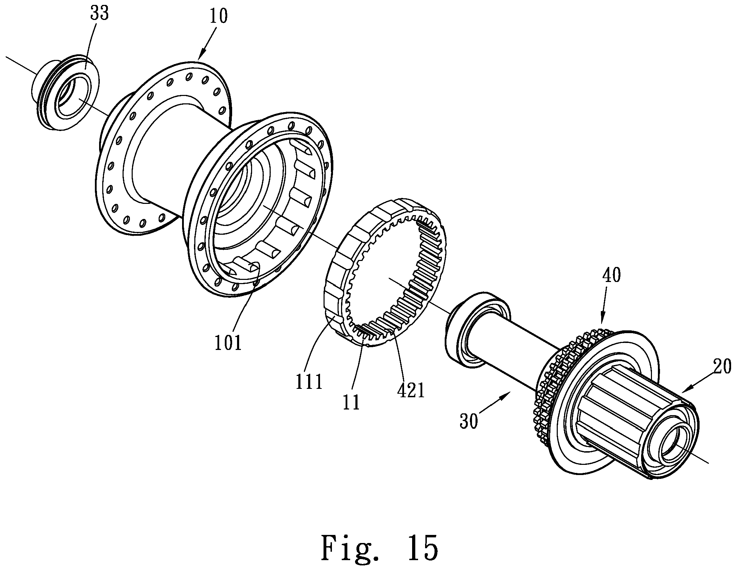

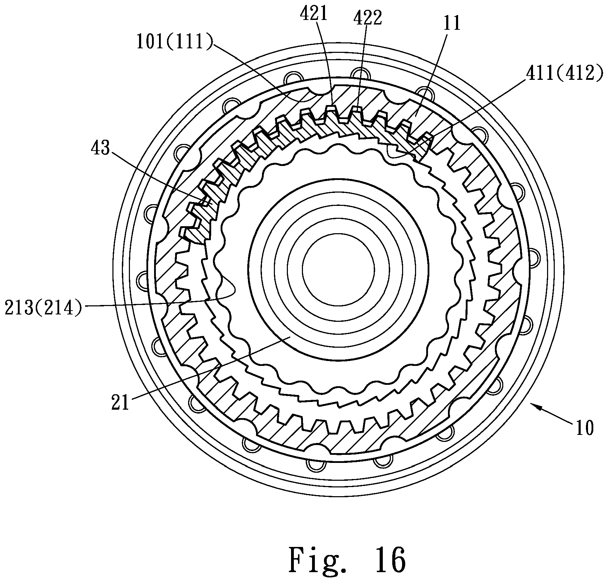

Figs. 15 and 16 show the fourth embodiment of the present invention, wherein the hub 10 has multiple first connection portions 101 extending axially therefrom and the driving ring 11 has multiple second connection portions 111 which are engaged with the first connection portions 101.

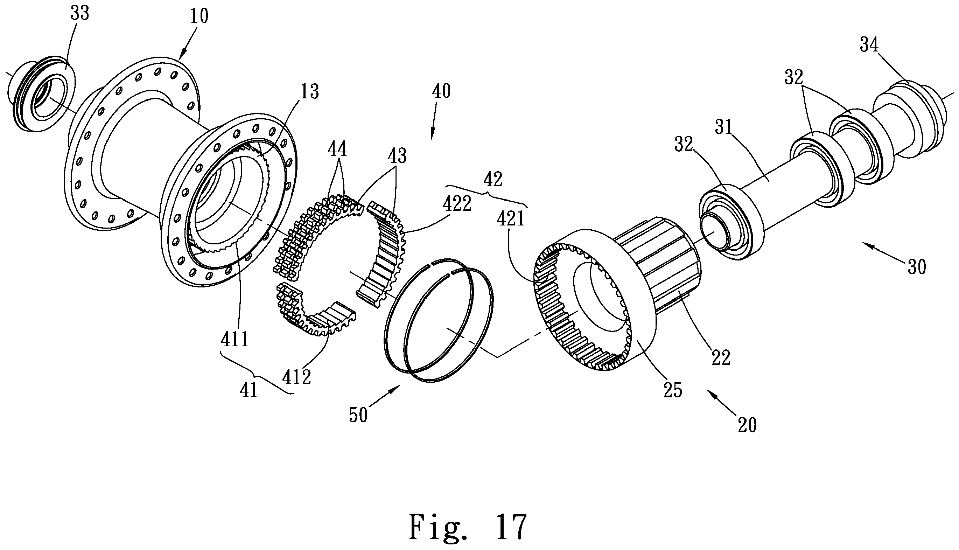

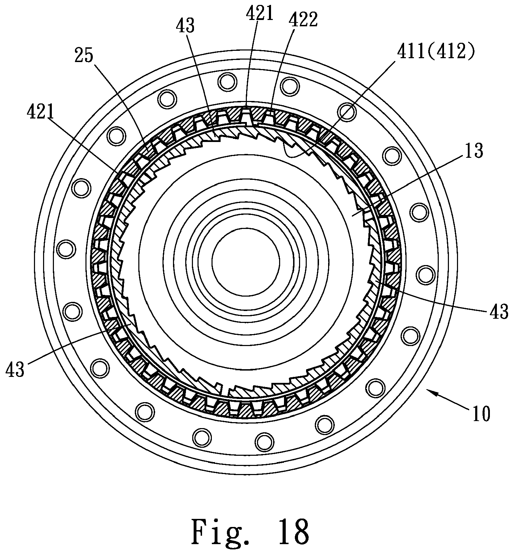

Figs. 17 and 18 show the fifth embodiment of the present invention and comprise a hub 10 adapted located at the center of the wheel and the hub 10 is a hollow hub. A ratchet unit 13 is located in one inner end of the hub 10. A socket unit 20 is a hollow socket, and a driving unit 25 and a flywheel unit 22 are respectively mounted to the socket unit 20. The driving unit 25 extends toward and is located on the outer periphery of the ratchet unit 13. The flywheel unit 22 is adapted to be connected with a sprocket unit. An axle unit 30 is located between the hub 10 and the socket unit 20. The axle unit 30 has an axle 31 extending therethrough. Three rotary members 32 are located between the axle 31 and the inner periphery of the hub 10, and between the axle 31 and the socket unit 20. A clutch driving device 40 is located between the ratchet unit 13 and the inner periphery of the driving unit 25. The clutch driving device 40 has a clutch unit 41, a driving unit 42 and three driving members 43 which are located between the clutch unit 41 and the driving unit 42. The clutch unit 41 comprises a first ratchet portion 411 and a second ratchet portion 412, wherein the first ratchet portion 411 is located on the ratchet unit 13 and the second ratchet portion 412 is connected to each of the driving members 43. The driving unit 42 comprises first driving teeth 421 and second driving teeth 422, wherein the first driving teeth 421 are defined in the inner end of the driving unit 25 and the second driving teeth 422 defined in each of the driving members 43. The first driving teeth 421 are engaged with the second driving teeth 422. The driving members 43 are movable linearly and radially between the first ratchet portion 411 and the first driving teeth 421 to engage the first ratchet portion 411 with second ratchet portion 412, or to disengage the first ratchet portion 411 from the second ratchet portion 412, and to co-rotate the hub 10 with the socket unit 20, or to separate the hub 10 from the socket unit 20. The socket unit 20 drives the hub 10 by the engagement between the first ratchet portion 411 with second ratchet portion 412 indirectly rotating the engagement between the first driving teeth 421 with second driving teeth 422. A return member 50 is mounted to the driving members 43 and the first ratchet portion 411 to move the driving members 43 linearly toward the first ratchet portion 411.

This embodiment provides the driving unit 25 connected to the socket unit and the ratchet unit 13 is located in the hub 10. The first driving teeth 421 are located in the driving unit 25 which is installed in the hub 10. The driving members 43 are located between the driving unit 42 and the ratchet unit 41.

The bicycle hub driving system can bear high driving force and has high sensitivity. The driving members 43 move linearly and drive the hub 10 radially so that the operation of the hub 10 saves effort and the hub 10 is operated sensitively. The driving members of the clutch driving device40 have multiple ratchet teeth and multiple driving teeth so as to have larger contact area to increase the transmission force. The load to the clutch driving device 40 is evenly spread to the ratchet portions 411, 412 so that the wearing for the ratchet teeth are even so as to avoid single ratchet tooth from overly worn out. The driving members 43 have multiple ratchet teeth so that even if one of the ratchet teeth is damaged, the driving member can be operated normally.

While we have shown and described the embodiment in accordance with the present invention, it should be clear to those skilled in the art that further embodiments may be made without departing from the scope of the present invention.

## Claims

1. A bicycle hub driving system comprising:
a hub (10) adapted located at a center of the wheel and being a hollow hub (10);
a socket unit (20) being a hollow socket, a flywheel unit (22) mounted to the socket unit (20), the flywheel unit (22) adapted to be connected with a sprocket unit;
a ratchet unit (21; 13);
an axle unit (30) located between the hub (10) and the socket unit (20), the axle unit (30) having an axle (31) extending therethrough, at least one rotary member (32) located between the axle (31) and an inner periphery of the hub (10);
a clutch driving device (40) having a clutch unit (41), a driving unit (42) and at least one driving member (43) located between the clutch unit (41) and the driving unit (42) of the clutch driving device (40), the clutch unit (41) comprising a first ratchet portion (411) and a second ratchet portion (412), the first ratchet portion (411) located on the ratchet unit (21) and the second ratchet portion (412) connected to the at least one driving member (43), the driving unit (42) of the clutch driving device (40) comprising first driving teeth (421) and second driving teeth (422), the second driving teeth (422) defined in the at least one driving member (43), the first driving teeth (421) engaged with the second driving teeth (422), the at least one driving member (43) movable radially between the first ratchet portion (411) and the first driving teeth (421) to engage the first ratchet portion (411) with second ratchet portion (412), or to disengage the first ratchet portion (411) from the second ratchet portion (412), and to co-rotate the hub (10) with the socket unit (20), or to separate the hub (10) from the socket unit (20), the socket unit (20) driving the hub (10) by engagement between the first ratchet portion (411) with second ratchet portion (412) of the socket unit (20) rotating engagement between the first driving teeth (421) with second driving teeth (422); the ratchet unit (21; 13) is located in an inner end of the hub (10), the ratchet unit (21; 13) being either a ratchet unit (21) mounted to the socket unit (20) or a ratchet unit (13) carried by the hub (10) in which case the socket unit (20) has a driving unit (25) mounted thereto and extending and located on an outer periphery of the ratchet unit (13);
at least one rotary member (32) is located between the axle (31) and the socket unit (20);
the first driving teeth (421) are defined in the inner end of the hub (10) or, when present, in the inner end of the driving unit (25) of the socket unit (20); the bicycle hub driving system being **characterised in that**:
the at least one driving member (43) is movable also linearly between the first ratchet portion (411) and the first driving teeth (421); a return member (50) is mounted to the at least one driving member (43) and the first ratchet portion (411) to move the at least one driving member (43) linearly toward the first ratchet portion (411); and the clutch driving device (40) is located between the ratchet unit (21) and the inner periphery of the hub (10) or, when present, the inner periphery of a driving unit (25) of the socket unit (20).

2. The driving system as claimed in claim 1, wherein when the first and second ratchet portions (411, 412) are disengaged from each other, the first and second driving teeth (421, 422) are engaged with each other; when the first and second ratchet portions (411, 412) are engaged with each other, the first and second driving teeth (421, 422) are disengaged from each other.

3. The driving system as claimed in claim 1, wherein a first seal ring (34) is located between an inner periphery of the socket unit (20) and the axle (31).

4. The driving system as claimed in claim 1, wherein a second seal ring (35) is located between the inner periphery of the hub (10) and the socket unit (20).

5. The driving system as claimed in claim 1, wherein the second driving teeth (422) has at least one groove (44) which separates the second driving teeth (422) into two parallel teeth, the return member (50) is engaged with the at least one groove (44), the return member (50) is a ring.

6. The driving system as claimed in claim 1, wherein the ratchet unit (21) comprises a connection part (211) and a ring (212) on the socket unit (20), the connection part (211) being a ring-shaped part and has multiple first positioning portions (213) extending axially therefrom, the ring (212) has the first ratchet portion (411) defined in an outer periphery thereof and second positioning portions (214) are defined in an inner periphery of the ring (212), the first positioning portions (213) are engaged with the second positioning portions (214).

7. The driving system as claimed in claim 1, wherein the hub (10) has a driving ring (11) connected to the inner periphery thereof and the first driving teeth (421) are defined in an inner periphery of the driving ring (11).

8. The driving system as claimed in claim 7, wherein the hub (10) has multiple first connection portions (101) extending axially therefrom and the driving ring (11) has multiple second connection portions (111) which are engaged with the first connection portions (101).

9. The driving system as claimed in claim 1, wherein the socket unit (20) has a positioning slot (23) defined in an outer periphery thereof, a positioning clip (24) is engaged with the positioning slot (23) and one side of the positioning clip (24) contacts one side of the at least one driving member (43) to prevent the at least one driving member (43) from moving axially on the first ratchet portion (411).

10. The driving system as claimed in claim 9, wherein the socket unit (20) has a contact slot (12) defined in the outer periphery thereof, the contact slot (12) has a contact face (121) defined in one of insides thereof, the at least one driving member (43) is mounted to the contact slot (12) and two sides of the at least one driving member (43) respectively contact the positioning clip (24) and the contact face (121).

## Patentansprüche

1. - Antriebssystem für eine Fahrradnabe mit:
einer Nabe (10) in einer Mitte des Rades, die angepasst und hohl ist;
einer Steckeinheit (20), die hohl ist und an die eine Schwungradeinheit (22) montiert ist, wobei die Schwungradeinheit (22) geeignet ist, mit einer Kettenradeinheit verbunden zu sein;
einer Klinkenradeinheit (21; 13);
einer Achseinheit (30) zwischen der Nabe (10) und der Steckeinheit (20), wobei die Achseinheit (30) eine Achse (31) aufweist, die dadurch verläuft, wobei mindestens ein Drehglied (32) zwischen der Achse (31) und einem inneren Umfang der Nabe (10) positioniert ist;
einem Kupplungsantrieb (40) mit einer Kupplungseinheit (41), einer Antriebseinheit (42) und mindestens einem Antriebsteil (43), das zwischen der Kupplungseinheit (41) und der Antriebseinheit (42) des Kupplungsantriebs (40) positioniert ist, wobei die Kupplungseinheit (41) ein erstes Klinkenradteil (411) und ein zweites Klinkenradteil (412) umfasst, wobei das erste Klinkenradteil (411) auf der Klinkenradeinheit (21) positioniert ist und das zweite Klinkenradteil (412) mit dem mindestens einen Antriebsteil (43) verbunden ist, wobei die Antriebseinheit (42) des Kupplungsantriebs (40) erste Antriebszähne (421) und zweite Antriebszähne (422) umfasst, wobei die zweiten Antriebszähne (422) in dem mindestens einen Antriebsteil (43) definiert sind und die ersten Antriebszähne (421) mit den zweiten Antriebszähnen (422) verbunden sind, wobei das mindestens eine Antriebsteil (43) radial zwischen dem ersten Klinkenradteil (411) und den ersten Antriebszähnen (421) beweglich ist, damit das erste Klinkenradteil (411) in das zweite Klinkenradteil (412) eingreift, oder um das erste Klinkenradteil (411) von dem zweiten Klinkenradteil (412) abzukoppeln und die Nabe (10) mit der Steckeinheit (20) gemeinsam rotieren zu lassen, oder um die Nabe (10) von der Steckeinheit (20) zu trennen, wobei die Steckeinheit (20) die Nabe (10) durch Eingriff zwischen dem ersten Klinkenradteil (411) und dem zweiten Klinkenradteil (412) der Steckeinheit (20) antreibt, in rotierendem Eingriff zwischen den ersten Antriebszähnen (421) und den zweiten Antriebszähnen (422);
die Klinkenradeinheit (21; 13) befindet sich an einem inneren Ende der Nabe (10) und ist entweder eine Klinkenradeinheit (21), die an die Steckeinheit (20) montiert ist, oder eine Klinkenradeinheit (13), die von der Nabe (10) getragen wird, wobei die Steckeinheit (20) eine Antriebseinheit (25) umfasst, die daran montiert ist und auf einem äußeren Umfang der Klinkenradeinheit (13) verläuft und dort positioniert ist;
mindestens ein Drehglied (32) befindet sich zwischen der Achse (31) und der Steckeinheit (20);
die ersten Antriebszähne (421) sind in dem inneren Ende der Nabe (10) definiert oder, wenn vorhanden, in dem inneren Ende der Antriebseinheit (25) der Steckeinheit (20); wobei das Antriebssystem für eine Fahrradnabe **dadurch gekennzeichnet ist, dass**:
das mindestens eine Antriebsteil (43) ist auch linear zwischen dem ersten Klinkenradteil (411) und den ersten Antriebszähnen (421) beweglich; ein Rückkehrglied (50) ist an das mindestens eine Antriebsteil (43) und das erste Klinkenradteil (411) montiert, um das mindestens eine Antriebsteil (43) linear hin zu dem ersten Klinkenradteil (411) zu bewegen; und der Kupplungsantrieb (40) befindet sich zwischen der Klinkenradeinheit (21) und dem inneren Umfang der Nabe (10) oder, wenn vorhanden, dem inneren Umfang einer Antriebseinheit (25) der Steckeinheit (20).

2. - Antriebssystem nach Anspruch 1, bei dem, wenn das erste und das zweite Klinkenradteil (411, 412) voneinander abgekoppelt sind, die ersten und zweiten Antriebszähne (421, 422) ineinander greifen; wenn das erste und das zweite Klinkenradteil (411, 412) ineinander greifen, sind die ersten und zweiten Antriebszähne (421, 422) voneinander abgekoppelt.

3. - Antriebssystem nach Anspruch 1, wobei ein erster Dichtring (34) sich zwischen einem inneren Umfang der Steckeinheit (20) und der Achse (31) befindet.

4. - Antriebssystem nach Anspruch 1, wobei ein zweiter Dichtring (35) sich zwischen dem inneren Umfang der Nabe (10) und der Steckeinheit (20) befindet.

5. - Antriebssystem nach Anspruch 1, wobei der zweite Antriebszahn (422) mindestens eine Rille (44) aufweist, die den zweiten Antriebszahn (422) in zwei parallele Zähne trennt, wobei das Rückkehrglied (50) mit der mindestens einen Rille (44) verbunden ist und das Rückkehrglied (50) ein Ring ist.

6. - Antriebssystem nach Anspruch 1, wobei die Klinkenradeinheit (21) ein Verbindungsteil (211) und einen Ring (212) auf der Steckeinheit (20) umfasst, das Verbindungsteil (211) ist ein ringförmiges Teil und hat mehrere erste Platzierungsteile (213), die axial davon ausgehen, der Ring (212) hat das erste Klinkenradteil (411), das in einem äußeren Umfang davon definiert ist, und zweite Platzierungsteile (214) sind in einem inneren Umfang des Ringes (212) definiert, die ersten Platzierungsteile (213) greifen in die zweiten Platzierungsteile (214) ein.

7. - Antriebssystem nach Anspruch 1, wobei die Nabe (10) einen Antriebsring (11) hat, der mit deren innerem Umfang verbunden ist, und die ersten Antriebszähne (421) sind in einem inneren Umfang des Antriebsrings (11) definiert.

8. - Antriebssystem nach Anspruch 7, wobei die Nabe (10) mehrere erste Verbindungsteile (101) aufweist, die axial davon ausgehen, und der Antriebsring (11) mehrere zweite Verbindungsteile (111) aufweist, die in die ersten Verbindungsteile (101) eingreifen.

9. - Antriebssystem nach Anspruch 1, wobei die Steckeinheit (20) eine Platzierungsnut (23) in einem äußeren Umfang davon definiert hat, ein Platzierungsclip (24) ist mit dem Positionierungsschlitz (23) verbunden und eine Seite des Platzierungsclips (24) berührt eine Seite des mindestens einen Antriebsteils (43), um das mindestens eine Antriebsteil (43) daran zu hindern, sich axial auf dem ersten Klinkenradteil (411) zu bewegen.

10. - Antriebssystem nach Anspruch 9, wobei die Steckeinheit (20) einen Kontaktschlitz (12) aufweist, der in dessen äußerem Umfang definiert ist, der Kontaktschlitz (12) hat eine Kontaktseite (121), die in einer der Innenseiten davon definiert ist, das mindestens eine Antriebsteil (43) wird an den Kontaktschlitz (12) montiert, und zwei Seiten des mindestens einen Antriebsteils (43) berühren den Positionierungsclip (24) bzw. die Kontaktseite (121) .

## Revendications

1. - Système d'entraînement de moyeu de bicyclette comprenant :
un moyeu (10) adapté pour être placé à un centre de la roue et qui est un moyeu creux (10) ;
une unité douille (20) qui est une douille creuse, une unité volant (22) montée sur l'unité douille (20), l'unité volant (22) étant adaptée pour être reliée à une unité pignon ;
une unité à rochet (21 ; 13) ;
une unité essieu (30) située entre le moyeu (10) et l'unité douille (20), l'unité essieu (30) ayant un essieu (31) s'étendant à travers celle-ci, au moins un élément rotatif (32) étant situé entre l'essieu (31) et une périphérie interne du moyeu (10) ;
un dispositif d'entraînement d'embrayage (40) ayant une unité embrayage (41), une unité d'entraînement (42) et au moins un élément d'entraînement (43) situé entre l'unité embrayage (41) et l'unité d'entraînement (42) du dispositif d'entraînement d'embrayage (40), l'unité embrayage (41) comprenant une première partie rochet (411) et une seconde partie rochet (412), la première partie rochet (411) étant située sur l'unité à rochet (21) et la seconde partie rochet (412) étant reliée à l'au moins un élément d'entraînement (43), l'unité d'entraînement (42) du dispositif d'entraînement d'embrayage (40) comprenant des premières dents d'entraînement (421) et des secondes dents d'entraînement (422), les secondes dents d'entraînement (422) étant définies dans l'au moins un élément d'entraînement (43), les premières dents d'entraînement (421) étant en prise avec les secondes dents d'entraînement (422), l'au moins un élément d'entraînement (43) étant mobile radialement entre la première partie rochet (411) et les premières dents d'entraînement (421) pour mettre la première partie rochet (411) en prise avec la seconde partie rochet (412), ou désengager la première partie rochet (411) de la seconde partie rochet (412), et FAIRE tourner conjointement le moyeu (10) avec l'unité douille (20), ou séparer le moyeu (10) de l'unité douille (20), l'unité douille (20) entraînant le moyeu (10) par prise entre la première partie rochet (411) et la seconde partie rochet (412) de l'unité douille (20) et prise rotative entre les premières dents d'entraînement (421) et les secondes dents d'entraînement (422) ;
l'unité à rochet (21 ; 13) étant située dans une extrémité interne du moyeu (10), l'unité à rochet (21 ; 13) étant soit une unité à rochet (21) montée sur l'unité douille (20) soit une unité à rochet (13) portée par le moyeu (10), auquel cas l'unité douille (20) a une unité d'entraînement (25) montée sur celle-ci et s'étendant et située sur une périphérie externe de l'unité à rochet (13) ;
au moins un élément rotatif (32) étant situé entre l'essieu (31) et l'unité douille (20) ;
les premières dents d'entraînement (421) étant définies dans l'extrémité interne du moyeu (10) ou, lorsqu'elle est présente, dans l'extrémité interne de l'unité d'entraînement (25) de l'unité douille (20) ; le système d'entraînement de moyeu de bicyclette étant **caractérisé par le fait que** :
l'au moins un élément d'entraînement (43) est également mobile linéairement entre la première partie rochet (411) et les premières dents d'entraînement (421) ; un élément de retour (50) est monté sur l'au moins un élément d'entraînement (43) et la première partie rochet (411) pour déplacer l'au moins un élément d'entraînement (43) linéairement vers la première partie rochet (411) ; et le dispositif d'entraînement d'embrayage (40) est situé entre l'unité à rochet (21) et la périphérie interne du moyeu (10) ou, lorsqu'elle est présente, la périphérie interne d'une unité d'entraînement (25) de l'unité douille (20) .

2. - Système d'entraînement selon la revendication 1, dans lequel, lorsque les première et seconde parties rochets (411, 412) sont désengagées l'une de l'autre, les premières et secondes dents d'entraînement (421, 422) sont en prise les unes avec les autres ; lorsque les première et seconde parties rochets (411, 412) sont en prise l'une avec l'autre, les premières et secondes dents d'entraînement (421, 422) sont désengagées les unes des autres.

3. - Système d'entraînement selon la revendication 1, dans lequel une première bague d'étanchéité (34) est située entre une périphérie interne de l'unité douille (20) et l'essieu (31).

4. - Système d'entraînement selon la revendication 1, dans lequel une seconde bague d'étanchéité (35) est située entre la périphérie interne du moyeu (10) et l'unité douille (20).

5. - Système d'entraînement selon la revendication 1, dans lequel les secondes dents d'entraînement (422) ont au moins une rainure (44) qui sépare les secondes dents d'entraînement (422) en deux dents parallèles, l'élément de retour (50) est en prise avec l'au moins une rainure (44), l'élément de retour (50) est une bague.

6. - Système d'entraînement selon la revendication 1, dans lequel l'unité à rochet (21) comprend une partie de liaison (211) et une bague (212) sur l'unité à rochet (20), la partie de liaison (211) étant une pièce en forme de bague et ayant de multiples premières parties de positionnement (213) s'étendant axialement à partir de celle-ci, la bague (212) a la première partie rochet (411) définie dans une périphérie externe de celle-ci et des secondes parties de positionnement (214) sont définies dans une périphérie interne de la bague (212), les premières parties de positionnement (213) étant en prise avec les secondes parties de positionnement (214).

7. - Système d'entraînement selon la revendication 1, dans lequel le moyeu (10) a une bague d'entraînement (11) reliée à la périphérie interne de celui-ci et les premières dents d'entraînement (421) sont définies dans une périphérie interne de la bague d'entraînement (11).

8. - Système d'entraînement selon la revendication 7, dans lequel le moyeu (10) a de multiples premières parties de liaison (101) s'étendant axialement à partir de celui-ci et la bague d'entraînement (11) a de multiples secondes parties de liaison (111) qui sont en prise avec les premières parties de liaison (101).

9. - Système d'entraînement selon la revendication 1, dans lequel l'unité douille (20) a une fente de positionnement (23) définie dans une périphérie externe de celle-ci, un clip de positionnement (24) est en prise avec la fente de positionnement (23), et un côté du clip de positionnement (24) est en contact avec un côté de l'au moins un élément d'entraînement (43) pour empêcher l'au moins un élément d'entraînement (43) de se déplacer axialement sur la première partie rochet (411).

10. - Système d'entraînement selon la revendication 9, dans lequel l'unité douille (20) a une fente de contact (12) définie dans la périphérie externe de celle-ci, la fente de contact (12) a une face de contact (121) définie dans l'un des intérieurs de celle-ci, l'au moins un élément d'entraînement (43) est monté sur la fente de contact (12) et deux côtés de l'au moins un élément d'entraînement (43) sont en contact avec le clip de positionnement (24) et la face de contact (121), respectivement.
